(19) Europäisches Patentamt
European Patent Office
Office européen des brevets

(11) **EP 4 478 516 A1**

(12) **EUROPEAN PATENT APPLICATION**
published in accordance with Art. 153(4) EPC

(43) Date of publication:
**18.12.2024   Bulletin 2024/51**

(21) Application number: **23753230.4**

(22) Date of filing: **10.02.2023**

(51) International Patent Classification (IPC):
*H01M 50/417* (2021.01)     *H01M 50/403* (2021.01)
*H01M 50/44* (2021.01)      *H01M 50/489* (2021.01)
*H01M 10/052* (2010.01)

(52) Cooperative Patent Classification (CPC):
**H01M 10/052; H01M 50/403; H01M 50/417;
H01M 50/44; H01M 50/489;** Y02E 60/10

(86) International application number:
**PCT/KR2023/002039**

(87) International publication number:
**WO 2023/153884 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2022   KR 20220017777**

(71) Applicant: **LG Chem, Ltd.**
**Yeongdeungpo-gu**
**Seoul 07336 (KR)**

(72) Inventors:
• **LEE, Joo-Sung**
  **Daejeon 34122 (KR)**
• **JIN, Sun-Mi**
  **Daejeon 34122 (KR)**

(74) Representative: **Hoffmann Eitle**
**Patent- und Rechtsanwälte PartmbB**
**Arabellastraße 30**
**81925 München (DE)**

(54) **MANUFACTURING METHOD OF SEPARATOR, SEPARATOR MANUFACTURED THEREBY, AND ELECTROCHEMICAL DEVICE CONTAINING SAME**

(57)    The present disclosure relates to a method for manufacturing a separator, a separator obtained by the method and an electrochemical device including the separator. The method for manufacturing a polyolefin separator, includes the steps of: (S1) introducing and mixing polyolefin and a diluting agent and carrying out extrusion to prepare a polyolefin composition; (S2) molding and orienting the polyolefin composition in the form of a sheet; (S3) dipping the oriented sheet in an extraction bath to form a porous membrane; and (S4) thermally fixing the porous membrane, wherein the extraction bath includes an organic solvent in its lower layer part and includes water and a surfactant in its upper layer part. The method for manufacturing a polyolefin separator can provide a separator having improved wettability with an electrolyte by introducing a surfactant thereto. In addition, it is possible to inhibit defects in appearance caused by water stains and to provide a separator having excellent physical properties and an electrochemical device including the separator.

FIG. 1

**Description**

TECHNICAL FIELD

The present disclosure relates to a separator which may be used for an electrochemical device, such as a lithium secondary battery, a method for manufacturing a separator and an electrochemical device including the separator.
The present application claims priority to Korean Patent Application No. 10-2022-0017777 filed on February 10, 2022 in the Republic of Korea, the disclosures of which are incorporated herein by reference.

BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, development of rechargeable secondary batteries and lithium secondary batteries having high energy density have been focused.
A lithium secondary battery has a structure including an electrode assembly having a positive electrode and a negative electrode, each of which includes an active material coated on an electrode current collector, and a separator interposed between both electrodes, and a nonaqueous electrolyte injected to the electrode assembly.
In general, a lithium secondary battery is assembled by stacking positive electrodes and negative electrodes alternately, forming an electrode assembly having a structure in which a separator is interposed between the positive electrode and the negative electrode, inserting the electrode assembly to a battery casing including a can or pouch having a predetermined size and shape, and finally injecting an electrolyte thereto. Herein, the electrolyte infiltrates to the gap among the positive electrode, the negative electrode and the separator by capillary force. However, in terms of the properties of materials, the positive electrode, the negative electrode and the separator include highly hydrophobic materials, while the electrolyte includes a hydrophilic ingredient. For this reason, a considerable amount of time and a complicated processing condition are required in order to improve the wettability of the electrodes and separator with the electrolyte.
Particularly, there has been an attempt to control the pore size and porosity of a separator in order to improve the wettability of a separator with an electrolyte. A polymer porous support using a polyolefin-based polymer has been used widely as a separator, and there has been an attempt to control the pore size and porosity in manufacturing such a polymer porous support separator. However, there has been a limitation in improvement of the wettability of a separator with an electrolyte merely by a physical process.

DISCLOSURE

Technical Problem

The present disclosure is designed to solve the problems of the related art, and therefore the present disclosure is directed to providing a method for manufacturing a polyolefin separator having improved wettability with an electrolyte.
The present disclosure is also directed to providing a separator having improved wettability with an electrolyte, inhibited from defects in appearance and showing excellent physical properties, and an electrochemical device including the separator.
It will be easily understood that these and other objects and advantages of the present disclosure may be realized by the means shown in the appended claims and combinations thereof.

Technical Solution

The inventors of the present disclosure have found that the above-mentioned problems can be solved by the method for manufacturing a separator as described hereinafter, a separator obtained therefrom and an electrochemical device including the separator.
According to the first embodiment of the present disclosure, there is provided a method for manufacturing a polyolefin separator, including the steps of:

(S1) introducing and mixing polyolefin and a diluting agent and carrying out extrusion to prepare a polyolefin composition;
(S2) molding and orienting the polyolefin composition in the form of a sheet;
(S3) dipping the oriented sheet in an extraction bath to form a porous membrane; and

(S4) thermally fixing the porous membrane,
wherein the extraction bath includes an organic solvent in its lower layer part and includes water and a surfactant in its upper layer part.

According to the second embodiment of the present disclosure, there is provided the method for manufacturing a polyolefin separator as defined in the first embodiment, wherein the surfactant has a change in permeability of 70% or less, and the change in permeability is defined according to the following Formula 1:

Change in permeability (%) = [(Permeability before storing electrolyte - Permeability after storing electrolyte) / (Permeability before storing electrolyte)] X 100 　　　[Formula 1]

wherein 'Permeability before storing electrolyte' refers to the permeability determined right after introducing the surfactant to the electrolyte, 'Permeability after storing electrolyte' refers to the permeability determined after introducing the surfactant to the electrolyte and storing the electrolyte at 70°C for 3 hours, the electrolyte is prepared by dissolving $LiPF_6$ in a mixed solvent containing ethylene carbonate and ethylene methylene carbonate at a volume ratio of 7:3 to 1.0 M, the surfactant is introduced in an amount of 1 wt% based on 100 wt% of the electrolyte, and 'Permeability before storing electrolyte' and 'Permeability after storing electrolyte' are determined by using a UV-Vis spectrophotometer according to ASTM-D1003.

According to the third embodiment of the present disclosure, there is provided the method for manufacturing a polyolefin separator as defined in the first or the second embodiment, wherein the surfactant has a change in permeability of 50% or less.

According to the fourth embodiment of the present disclosure, there is provided the method for manufacturing a polyolefin separator as defined in any one of the first to the third embodiments, wherein the weight ratio of water to the surfactant is 99.9:0.1-95:5.

According to the fifth embodiment of the present disclosure, there is provided the method for manufacturing a polyolefin separator as defined in any one of the first to the fourth embodiments, wherein the organic solvent is methylene chloride (MC).

According to the sixth embodiment of the present disclosure, there is provided the method for manufacturing a polyolefin separator as defined in any one of the first to the fifth embodiments, wherein the oriented sheet passes through the lower layer part in the extraction bath first, and then passes through the upper layer part therein, in step (S3).

According to the seventh embodiment of the present disclosure, there is provided a polyolefin separator obtained by the method as defined in any one of the first to the sixth embodiments.

According to the eighth embodiment of the present disclosure, there is provided a polyolefin separator which is provided with a polyolefin porous support including a plurality of fibrils and pores formed by entanglement of the plurality of fibrils, and includes a surfactant on the surface of the fibrils, wherein the surfactant has a change in permeability of 70% or less before and after storing an electrolyte, and the change in permeability is defined according to the following Formula 1:

Change in permeability (%) = [(Permeability before storing electrolyte - Permeability after storing electrolyte) / (Permeability before storing electrolyte)] X 100 　　　[Formula 1]

wherein 'Permeability before storing electrolyte' refers to the permeability determined right after introducing the surfactant to the electrolyte, 'Permeability after storing electrolyte' refers to the permeability determined after introducing the surfactant to the electrolyte and storing the electrolyte at 70°C for 3 hours, the electrolyte is prepared by dissolving $LiPF_6$ in a mixed solvent containing ethylene carbonate and ethylene methylene carbonate at a volume ratio of 7:3 to 1.0 M, the surfactant is introduced in an amount of 1 wt% based on 100 wt% of the electrolyte, and 'Permeability before storing electrolyte' and 'Permeability after storing electrolyte' are determined by using a hazemeter according to ASTM-D1003.

According to the ninth embodiment of the present disclosure, there is provided the polyolefin separator as defined in the eighth embodiment, wherein the surfactant has a change in permeability of 50% or less before and after storing the electrolyte.

According to the tenth embodiment of the present disclosure, there is provided the polyolefin separator as defined in the eighth or the ninth embodiment, which is for use in an electrochemical device and has a water contact angle of 100° or less.

According to the eleventh embodiment of the present disclosure, there is provided is an electrochemical device including a positive electrode, a negative electrode and a separator interposed between the positive electrode and the negative electrode, wherein the separator is the same as defined in any one of the eighth to the tenth embodiments.

According to the twelfth embodiment of the present disclosure, there is provided the electrochemical device as defined in the eleventh embodiment, which is a lithium secondary battery.

Advantageous Effects

The method for manufacturing a polyolefin separator according to the present disclosure can provide a separator having improved wettability with an electrolyte by introducing a surfactant thereto. In addition, it is possible to inhibit defects in appearance caused by water stains and to provide a separator having excellent physical properties and an electrochemical device including the separator.

Further, the extraction bath used according to the present disclosure for extracting a diluting agent includes a surfactant, and thus requires no additional step for introducing a surfactant. Therefore, there is an advantage in that the surfactant can be introduced by a simpler method.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is an image taken 5 minutes after dropping 2 $\mu$L of propylene carbonate to the surface of the separator prepared according to Example 1.

FIG. 2 is an image taken 5 minutes after dropping 2 $\mu$L of propylene carbonate to the surface of the separator prepared according to Example 2.

FIG. 3 is an image taken 5 minutes after dropping 2 $\mu$L of propylene carbonate to the surface of the separator prepared according to Comparative Example 1.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression 'a part includes an element' does not preclude the presence of any additional elements but means that the part may further include the other elements.

In general, a polyolefin-based separator shows hydrophobic property. Therefore, there is a problem in that the polyolefin-bases separator is not sufficiently wetted with an electrolyte showing hydrophilic property. There has been an attempt to improve the wettability of such a separator with an electrolyte by controlling the pore size and porosity of the separator, but there is a limitation when applying a physical method alone.

To solve the above-mentioned problem, the inventors of the present disclosure are directed to improving the wettability of a separator with an electrolyte by introducing a surfactant to the surface of the separator in the process for manufacturing the separator.

Further, the inventors of the present disclosure are directed to providing a separator capable of maintaining its stability even after injecting an electrolyte to an electrode assembly by introducing a predetermined surfactant to the surface of the separator.

In one aspect of the present disclosure, there is provided a method for manufacturing a polyolefin separator, including the steps of:

(S1) introducing and mixing polyolefin and a diluting agent and carrying out extrusion to prepare a polyolefin composition;

(S2) molding and orienting the polyolefin composition in the form of a sheet;

(S3) dipping the oriented sheet in an extraction bath to form a porous membrane; and

(S4) thermally fixing the porous membrane,

wherein the extraction bath includes an organic solvent in its lower layer part and includes water and a surfactant in its upper layer part.

In step (S1), polyolefin and a diluting agent are introduced and mixed, and extrusion is carried out to prepare a polyolefin composition.

Herein, the polyolefin may include: polyethylene; polypropylene; polybutylene; polypentene; polyhexene; polyoctene; a copolymer of at least two of ethylene, propylene, butene, pentene, 4-methylpentene, hexene, and octene;

or a mixture thereof.

Particular examples of the polyethylene include low-density polyethylene (LDPE), linear low-density polyethylene (LLDPE), high-density polyethylene (HDPE), or the like. Among them, high-density polyethylene having high crystallinity and showing a high melting point of resin is most preferred.

The polyolefin may have a weight average molecular weight of 200,000-1,000,000, 220,000-700,000, or 250,000-500,000. According to the present disclosure, high-molecular weight polyolefin having a weight average molecular weight of 200,000-1,000,000 is used as a starting material for manufacturing a separator. In this manner, it is possible to provide a separator with excellent strength and heat resistance, while ensuring the uniformity and film-forming processability of the separator film.

The diluting agent may include liquid or solid paraffin oil, wax, soybean oil, or the like, used generally for manufacturing a separator. For example, a diluting agent which undergoes liquid-liquid phase separation with polyolefin may also be used. Particular examples of the diluting agent may include: a phthalic acid ester, such as dibutyl phthalate, dihexyl phthalate, dioctyl phthalate, or the like; aromatic ether, such as diphenyl ether, benzyl ether, or the like; C10-C20 fatty acid, such as palmitic acid, stearic acid, oleic acid, linolic acid, linoleic acid, or the like, C10-C20 fatty acid alcohol, such as palmitic acid alcohol, stearic acid alcohol, oleic acid alcohol, or the like; or a fatty acid ester in which one or at least two fatty acids of saturated or unsaturated fatty acids whose fatty acid group has 4-26 carbon atoms, or unsaturated fatty acids whose double bond is substituted with epoxy are ester-bound with a C1-C10 alcohol having 1-8 hydroxyl groups, such as palmitic acid mono-, di- or tri-ester, stearic acid mono-, di- or tri-ester, oleic acid mono-, di- or tri-ester, linoleic acid mono-, di- or tri-ester, or the like. The above-mentioned ingredients may be used alone or in the form of a mixture containing two or more of them as a diluting agent.

The content of the diluting agent may be 100-350 parts by weight, 125-300 parts by weight, or 150-250 parts by weight, based on 100 parts by weight of the content of polyolefin. When the content of the diluting agent satisfies the above-defined range, it is possible to inhibit the problems caused by an excessively high content of polyolefin, including a decrease in porosity and pore size, degradation of interconnection of pores and a significant decrease in permeability, and an increase in viscosity of the polyolefin composition and extrusion load, resulting in a difficulty in processing. In addition, it is possible to reduce the problems caused by an excessively low content of polyolefin, including degradation of the miscibility of polyolefin with the diluting agent, which causes polyolefin to be extruded in the form of gel, while not being kneaded thermodynamically with the diluting agent, resulting in breakage upon orientation and non-uniform thickness.

If necessary, the polyolefin composition may further include conventional additives for improving specific functions, such as an initiator, a crosslinking agent, a catalyst, an oxidation stabilizer, or the like.

The extrusion may be carried out at a temperature ranging from 200°C to 250°C. In general, the extrusion may be carried out by using a single screw extruder or twin screw extruder. For example, the extruder may be a twin screw extruder provided with a hopper for introducing polyolefin and a diluting agent, a kneading section for mixing the introduced materials while conveying them, and a die outlet for extruding the mixed materials.

Next, the extruded polyolefin composition is molded and oriented into the form of a sheet, in step (S2).

According to an embodiment of the present disclosure, the extruded polyolefin composition as a product of step (S1) is cooled by using a general casting or calendering process using water-cooling or air-cooling mode so that it may be molded into the form of a sheet.

According to an embodiment of the present disclosure, the resultant product molded in the form of a sheet is biaxially oriented in the machine direction and the transverse direction to form an oriented sheet. It is possible to provide a separator having improved mechanical strength and puncture strength by orienting the product molded in the form of a sheet.

The orientation may be carried out by sequential or simultaneous orientation using a roll or a tenter. The orientation ratio may be 3 times or more, or 4-10 times, each in the machine direction and transverse direction. When the orientation ratio satisfies the above-defined ratio, it is possible to prevent the problem of insufficient orientation in one direction, a failure in balance of physical properties between the machine direction and the transverse direction, and degradation of tensile strength and puncture strength. When the total orientation ratio satisfies the above-defined range, it is possible to prevent the problems of non-orientation or a failure in pore formation.

According to an embodiment of the present disclosure, the orientation temperature may be varied with the melting point of polyolefin and concentration and type of the diluting agent.

For example, when the polyolefin is polyethylene and the diluting agent is liquid paraffin, the orientation temperature may be 70-160°C, 90-140°C, or 100-130°C in the case of orientation in the machine direction (MD), may be 90-180°C, 110-160°C, or 120-150°C in the case of orientation in the transverse direction (TD).

When the orientation temperature satisfies the above-defined range, it is possible to prevent the problem of breakage or non-orientation caused by the lack of softness resulting from a low orientation temperature. In addition, it is possible to prevent partial over-orientation or a difference in physical properties, caused by a high orientation temperature.

Then, the oriented sheet is dipped in an extraction bath to form a porous membrane, in step (S3). Herein, the extraction bath includes an organic solvent in its lower layer part and includes water and a surfactant in its upper layer part.

According to the present disclosure, since the extraction bath for extracting the diluting agent includes a surfactant, three is no need for an additional step of introducing a surfactant to the separator, and thus the surfactant can be introduced by a simpler method.

According to an embodiment of the present disclosure, the extraction bath has at least dual layer structure divided into an upper layer part and a lower layer part.

Particularly, the lower layer part of the extraction bath includes an organic solvent having a higher specific gravity as compared to water, and the upper layer part thereof includes water and a surfactant. The upper layer part may function as a water seal in the extraction bath, and thus there is an advantage in that evaporation of the organic solvent can be prevented.

The content ratio (or volume ratio) of the upper layer part to the lower layer part may be 1:99-10:90. When the above-defined range is satisfied, there is an advantage in that it is possible to ensure a time during which the diluting agent is dissolved through the organic solvent, while inhibiting the evaporation of the organic solvent in the lower layer part.

According to an embodiment of the present disclosure, the oriented sheet may pass through the lower layer part in the extraction bath first, and then may pass through the upper layer part.

For example, the oriented sheet is dipped in the lower layer part of the extraction bath first so that the diluting agent may be extracted with the organic solvent. Then, the sheet from which the diluting agent is extracted passes through the upper layer part of the extraction bath to apply the surfactant to the sheet. After that, the sheet may be dried to form a porous membrane.

The weight ratio of water to the surfactant contained in the upper layer part of the extraction bath may be 99.9:0.1-95:5, or 99.5:0.5-97:3. When water and the surfactant are contained in the above-defined range, there is an advantage in that the surfactant remaining in the separator may provide the separator with improved hydrophilicity, while preventing the mixing of water of the upper layer part with the organic solvent of the lower layer part.

According to an embodiment of the present disclosure, the surfactant may have a change in permeability of 70% or less, 10-70%, or 20-60%, before and after storing the electrolyte. Preferably, the surfactant may have a change in permeability of 20-50% before and after storing the electrolyte.

When satisfying the above-defined range of a change in permeability, the surfactant can maintain stability even after injecting an electrolyte to an electrode assembly. In this manner, it is possible to inhibit electrochemical side reactions and to improve the safety of a lithium secondary battery.

Herein, the change in permeability is defined according to the following Formula 1:

$$\text{Change in permeability (\%)} = \left[ \frac{(\text{Permeability before storing electrolyte} - \text{Permeability after storing electrolyte})}{(\text{Permeability before storing electrolyte})} \right] \times 100 \qquad \text{[Formula 1]}$$

wherein 'Permeability before storing electrolyte' refers to the permeability determined right after introducing the surfactant to the electrolyte, 'Permeability after storing electrolyte' refers to the permeability determined after introducing the surfactant to the electrolyte and storing the electrolyte at 70°C for 3 hours, the electrolyte is prepared by dissolving $LiPF_6$ in a mixed solvent containing ethylene carbonate and ethylene methylene carbonate at a volume ratio of 7:3 to 1.0 M, the surfactant is introduced in an amount of 1 wt% based on 100 wt% of the electrolyte, and 'Permeability before storing electrolyte' and 'Permeability after storing electrolyte' are determined by using a UV-Vis spectrophotometer according to ASTM-D1003.

According to the present disclosure, the permeability may be determined by using a UV-Vis spectrophotometer according to ASTM-D1003.

According to an embodiment of the present disclosure, the surfactant may include an anionic surfactant, a cationic surfactant, an amphoteric surfactant, a nonionic surfactant, or the like, and such surfactants may be used alone or in combination.

According to an embodiment of the present disclosure, the organic solvent is not particularly limited, as long as it is capable of extraction of the diluting agents. Particularly, the organic solvent that may be used is methylene chloride (MC), n-hexane, or the like. Considering the specific gravity as compared to water, it is preferred to use methylene chloride (MC) as an organic solvent.

According to an embodiment of the present disclosure, the extraction may be any conventional solvent extraction process, such as an immersion process, a solvent spray process or a ultrasonication process, and such processes may be used alone or in combination. After carrying out extraction, the content of residual diluting agents should be preferably 1 wt% or less. When the content of residual diluting agent is larger than 1 wt%, physical properties are degraded and permeability of the porous membrane is reduced. The content of residual diluting agent may be affected by extraction temperature and extraction time. To increase the solubility of diluting agents in the organic solvent, a higher extraction temperature is preferred. However, considering the safety problem caused by boiling of the organic solvent, the extraction temperature is preferably 40°C or lower. When the extraction temperature equals to or is lower than the solidifying point of the diluting agent, extraction efficiency may be decreased significantly. Thus, the extraction temperature should be higher than the solidifying point of the diluting agent.

In addition, the extraction time may be varied with the thickness of a porous membrane. In the case of a separator having a thickness of 5-15 $\mu$m, the extraction time may be 2-4 minutes suitably.

Then, the porous membrane is thermally fixed in step (S4).

The thermal fixing is a process of fixing and heating the porous membrane so that the porous membrane to be shrunk may be fixed forcibly to remove residual stress.

According to an embodiment of the present disclosure, when the polyolefin is polyethylene, the thermal fixing temperature may be 120-150°C, 123-138°C, or 125-133°C. When the polyolefin is polyethylene and the thermal fixing temperature satisfies the above-defined range, polyolefin molecules may be rearranged to remove residual stress of the porous membrane, and the problem of pore blocking of the porous membrane caused by partial melting may be reduced.

According to an embodiment of the present disclosure, the thermal fixing time may be 10-120 seconds, 20-90 seconds, or 30-60 seconds. When the thermal fixing is carried out for the above-defined range of time, polyolefin molecules may be rearranged to remove residual stress of the porous membrane, and the problem of pore blocking of the porous membrane caused by partial melting may be reduced.

In another aspect of the present disclosure, there is provided a polyolefin separator obtained by the method for manufacturing a separator according to an embodiment of the present disclosure. The separator is provided with a polyolefin porous support including a plurality of fibrils and pores formed by entanglement of the plurality of fibrils, and includes a surfactant on the surface of the fibrils.

The fibril refers to one formed by orientation and elongation of the polymer chains forming the polyolefin porous support in the longitudinal direction in the process for manufacturing the polyolefin porous support, resulting in an increase in binding force between the adjacent molecular chains and assemblage thereof in the longitudinal direction. As a result, the polyolefin porous support has a structure in which a plurality of fibrils arranged in parallel with the surface of the substrate are stacked in a layered structure. Reference will be made to the above description about the polyolefin porous support.

In addition, reference will be made to the above description about the surfactant.

Particularly, according to an embodiment of the present disclosure, since the surface of the fibrils includes a surfactant, it is possible to improve the wettability of the separator with an electrolyte and to prevent generation of stains, thereby inhibiting defects in appearance.

The polyolefin separator according to an embodiment of the present disclosure may have a water contact angle of 100° or less. Particularly, the polyolefin separator according to the present disclosure has relatively improved hydrophilic property, and thus may have a water contact angle of 10-80°.

The water contact angle may be determined by using Drop shape analyzer (DSA100S) available from Kruss Co. In a variant, for example, the contact angle of a water drop formed by dropping a distilled water drop to the surface of the polyolefin separator may be determined by using a contact angle tester model CA-DT-A (mfd. Kyowa Kaimen Kagaku KK) under the conditions of 23°C and 50% RH. Herein, the contact angle may be measured at two points (a left side point and right side point) of each of three sample films, and the average of six measurements may be represented as a contact angle. The distilled water drop may have a diameter of 2 mm, and the contact angle value appearing on the tester may be a value measured 1 minute after dropping the distilled water drop.

In yet another aspect of the present disclosure, there is provided an electrochemical device including a positive electrode, a negative electrode and a separator interposed between the positive electrode and the negative electrode, wherein the separator is obtained by the above-described method for manufacturing a separator.

The electrochemical device includes any device which carries out electrochemical reaction, and particular examples thereof include all types of primary batteries, secondary batteries, fuel cells, solar cells or capacitors. Particularly, among the secondary batteries, lithium secondary batteries, including lithium metal secondary batteries, lithium-ion secondary batteries, lithium polymer secondary batteries or lithium-ion polymer secondary batteries, are preferred.

According to an embodiment of the present disclosure, each of the positive electrode and the negative electrode used in combination with the separator according to the present disclosure is not particularly limited, and may be obtained by allowing each electrode active material to be bound to an electrode current collector through a method generally known in the art. Among the electrode active materials, non-limiting examples of the positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof, are used preferably. Non-limiting examples of the negative electrode active material include conventional negative electrode active materials that may be used for the negative electrodes for conventional electrochemical devices. Particularly, lithium intercalation materials, such as lithium metal or lithium alloys, carbon, petroleum coke, activated carbon, graphite or other carbonaceous materials, are used preferably. Non-limiting examples of the positive electrode current collector include foil made of aluminum, nickel or a combination thereof. Non-limiting examples of the negative electrode current collector include foil made of copper, gold, nickel, nickel alloys or a combination thereof.

The electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof. However, the present disclosure is not limited thereto.

In addition, the salt may be used suitably within a conventionally acceptable range, and the electrolyte may include the salt at a concentration of 0.5-2 M, particularly 0.9-1.5 M. For example, the salt may be a lithium salt.

Injection of the electrolyte may be carried out in an adequate step during the process for manufacturing a battery depending on the manufacturing process of a final product and properties required for a final product. In other words, injection of the electrolyte may be carried out before assembling a battery or in the final step of assembling a battery.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Examples**

The separator according to each of Examples and Comparative Examples was obtained by the following method.

**Example 1**

High-density polyethylene having a weight average molecular weight of 500,000, as polyolefin, and liquid paraffin having a dynamic viscosity of 68.00 cSt, as a diluting agent, were used at a weight ratio of 35:65, and extrusion was carried out at a temperature of 210°C to prepare a polyolefin composition.

The resultant polyethylene composition was passed through a T-die and a cooling casting roll so that it might be molded into the form of a sheet, and biaxial orientation was carried out by using a differential orientation machine at an orientation temperature of 115°C and an orientation ratio of 7 times in each of the machine direction and the transverse direction.

Then, the oriented sheet was allowed to run in an extraction bath having a volume ratio of the upper layer part to the lower layer part of 5:95 from the upper layer part to the lower layer pat so that it might be dipped in an organic solvent and retained therein for 3 minutes, and then was allowed to pass from the lower layer part to the upper layer part, followed by drying. Then, thermal fixing was carried out at 126°C to obtain a porous membrane. To the lower layer part of the extraction bath, methylene chloride was introduced as an organic solvent. To the upper layer part of the extraction bath, water and surfactant, BYK333 (polyether-modified polydimethylsiloxane, available from BYK Co.) were introduced at a weight ratio of 98:2.

**Example 2**

A separator was obtained in the same manner as Example 1, except that WE3475 (di-2-ethylhexyl sulphosuccinate, sodium salt, available from BASF) was introduced as a surfactant to the upper layer part (water seal) of the extraction bath.

**Example 3**

A separator was obtained in the same manner as Example 1, except that KL245 (polyether-modified polysiloxane, available from TEGO Co.) was introduced as a surfactant to the upper layer part (water seal) of the extraction bath.

**Comparative Example 1**

A separator was obtained in the same manner as Example 1, except that no surfactant was introduced to the upper layer part (water seal) of the extraction bath.

**Comparative Example 2**

A separator was obtained in the same manner as Example 1, except that BYK347 (polyether-modified siloxane, available from BYK) was introduced as a surfactant to the upper layer part (water seal) of the extraction bath.

**Test Results**

Each of the surfactants used in Examples and Comparative Examples was determined in terms of a change in permeability. The results are shown in the following Table 1.

[Table 1]

| Type of surfactant (Trade name) | Permeability before storing electrolyte (%) | Permeability after storing electrolyte (%) | Change in permeability (%) |
|---|---|---|---|
| BYK333 | 97 | 69 | 28.8 |
| WE3475 | 97 | 75 | 22.7 |
| KL245 | 97 | 48 | 50.5 |
| BYK347 | 97 | 26 | 73.2 |

**Method for Determining Permeability before/after Storing Electrolyte**

An electrolyte was prepared by dissolving $LiPF_6$ to 1.0 M in an organic solvent having a composition containing ethylene carbonate and ethyl methyl carbonate at a ratio of 3:7 (volume ratio). A surfactant was introduced in an amount of 1 wt% based on 100 wt% of the electrolyte, and permeability was determined by using a UV-Vis spectrophotometer according to ASTM-D1003.

The permeability before storing the electrolyte was determined as permeability right after the surfactant was introduced to the electrolyte. The permeability after storing the electrolyte was determined as permeability after the surfactant was introduced to the electrolyte and the electrolyte was stored at 70°C for 3 hours.

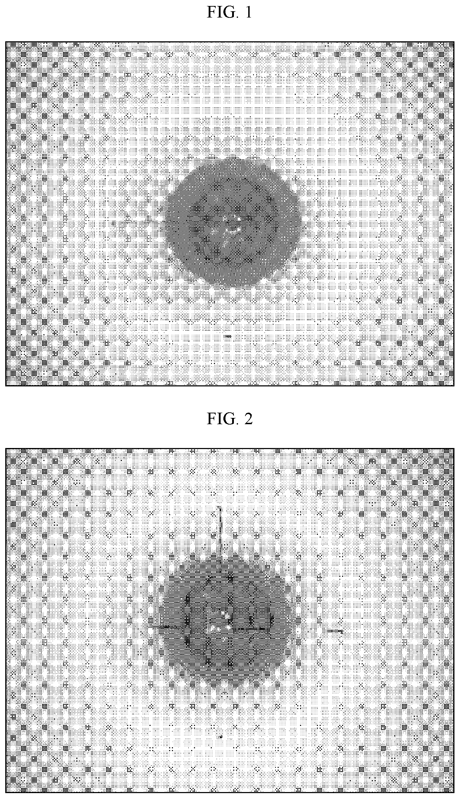

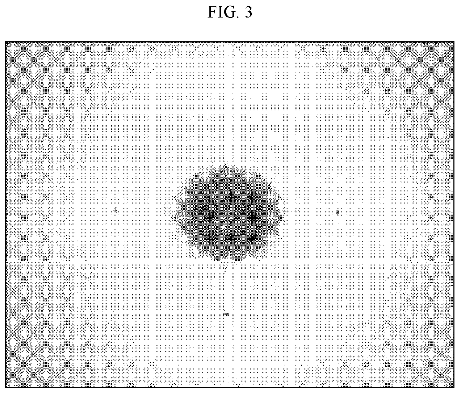

In addition, in order to evaluate the wettability of the separator with an electrolyte, 2 $\mu$L of propylene carbonate was dropped to the separator obtained according to each of Examples 1 and 2 and Comparative Example 1, and the separator was observed after 5 minutes. The images of the separators are shown in FIG. 1 to FIG. 3.

The separator obtained according to each of Examples and Comparative Examples was evaluated in terms of physical properties as follows. The results are shown in the following Table 2.

[Table 2]

|  | Ex. 1 | Ex. 2 | Ex. 3 | Comp. Ex. 1 | Comp. Ex. 2 |
|---|---|---|---|---|---|
| Appearance (water stains) | OK | OK | OK | NG | OK |
| Cycle characteristics of battery (Pass/Total) | 5 / 5 | 5 / 5 | 3 / 5 | 5 / 5 | 0 / 5 |
| Water drop contact angle | 75 | 78 | 77 | 119 | 69 |

**(1) Method for Evaluating Appearance (Water Stain)**

Water stain patterns were observed from the film appearance of each polyethylene separator to judge whether the separator was qualified or not.
(Judgement criteria: OK: no water stains, NG: water stain patterns are observed by the naked eyes)

**(2) Evaluation of Cycle Characteristics of Battery**

A secondary battery was obtained by stacking negative electrodes and positive electrodes alternately, while the separator according to each of Examples and Comparative Examples was interposed between the negative electrode and the positive electrode. Herein, the positive electrode was obtained by preparing a slurry containing $Li[Ni_{0.6}Mn_{0.2}Co_{0.2}]O_2$ as a positive electrode active material, carbon black as a conductive material and polyvinylidene fluoride (PVDF) as a binder at a ratio of 97:1.5:1.5, coating the resultant slurry onto aluminum foil having a thickness of 20 μm, followed by drying and compression. The negative electrode was obtained by mixing a mixture containing artificial graphite and natural graphite at a ratio of 5:5, as a negative electrode active material, Super C as a conductive material and SBR/CMC as a binder at a weight ratio of 98:1:1 to prepare a negative electrode slurry and applying the negative electrode slurry to one surface of a copper current collector, followed by drying and compression.

The secondary battery was subjected to initial (first time) charge/discharge by using an electrochemical charger. Herein, the secondary battery was charged by applying electric current at a current density of 0.1 C-rate to a voltage of 4.3 V, and was discharged at the same current density to 2.5 V. Such charge/discharge was carried out 200 times. During such charge/discharge cycles, the voltage and capacity of the positive electrode and the negative electrode contained in each battery were determined. From this, the capacity retention of each battery was calculated according to the following formula.

$$\text{Capacity retention (\%)} = (\text{Capacity at } 200^{th} \text{ cycle/Initial capacity}) \times 100$$

(Judgement criteria: OK: capacity retention of 90% or higher, NG: capacity retention of less than 90%)

### (3) Evaluation of Water Drop Contact Angle of Separator

A distilled water drop was dropped to the surface of each polyolefin separator to determine the contact angle of the water drop formed thereon by using a contact angle tester model CA-DT-A (mfd. Kyowa Kaimen Kagaku KK) under the conditions of 23°C and 50% RH. Herein, the contact angle was measured at two points (left side point and right side point) of each of three sample films, and the average of 6 measurements was represented as a contact angle value. The distilled water drop may have a diameter of 2 mm, and the contact angle value appearing on the tester is a value measured 1 minute after dropping the distilled water drop.

### Claims

1.  A method for manufacturing a polyolefin separator, comprising the steps of:

    (S1) introducing and mixing polyolefin and a diluting agent and carrying out extrusion to prepare a polyolefin composition;
    (S2) molding and orienting the polyolefin composition in the form of a sheet;
    (S3) dipping the oriented sheet in an extraction bath to form a porous membrane; and
    (S4) thermally fixing the porous membrane,
    wherein the extraction bath includes an organic solvent in its lower layer part and includes water and a surfactant in its upper layer part.

2.  The method for manufacturing a polyolefin separator according to claim 1, wherein the surfactant has a change in permeability of 70% or less, and the change in permeability is defined according to the following Formula 1:

    Change in permeability (%) = [(Permeability before storing electrolyte - Permeability after storing electrolyte) / (Permeability before storing electrolyte)] X 100,     [Formula 1]

    wherein 'Permeability before storing electrolyte' refers to the permeability determined right after introducing the surfactant to the electrolyte, 'Permeability after storing electrolyte' refers to the permeability determined after introducing the surfactant to the electrolyte and storing the electrolyte at 70°C for 3 hours, the electrolyte is prepared by dissolving $LiPF_6$ in a mixed solvent containing ethylene carbonate and ethylene methylene carbonate at a volume ratio of 7:3 to 1.0 M, the surfactant is introduced in an amount of 1 wt% based on 100 wt% of the electrolyte, and 'Permeability before storing electrolyte' and 'Permeability after storing electrolyte' are determined by using a UV-Vis spectrophotometer according to ASTM-D1003.

3.  The method for manufacturing a polyolefin separator according to claim 1, wherein the surfactant has a change in permeability of 50% or less.

4.  The method for manufacturing a polyolefin separator according to claim 1, wherein the weight ratio of water to the surfactant is 99.9:0.1-95:5.

5.  The method for manufacturing a polyolefin separator according to claim 1, wherein the organic solvent is methylene chloride (MC).

6.  The method for manufacturing a polyolefin separator according to claim 1, wherein the oriented sheet passes through the lower layer part in the extraction bath first and then passes through the upper layer part therein, in step (S3).

7.  A polyolefin separator obtained by the method as defined in any one of claims 1 to 6.

8.  A polyolefin separator which is provided with a polyolefin porous support including a plurality of fibrils and pores formed by entanglement of the plurality of fibrils, and includes a surfactant on the surface of the fibrils, wherein the surfactant has a change in permeability of 70% or less before and after storing an electrolyte, and the change in permeability is defined according to the following Formula 1:

Change in permeability (%) = [(Permeability before storing electrolyte - Permeability after storing electrolyte) / (Permeability before storing electrolyte)] X 100     [Formula 1]

wherein 'Permeability before storing electrolyte' refers to the permeability determined right after introducing the surfactant to the electrolyte, 'Permeability after storing electrolyte' refers to the permeability determined after introducing the surfactant to the electrolyte and storing the electrolyte at 70°C for 3 hours, the electrolyte is prepared by dissolving $LiPF_6$ in a mixed solvent containing ethylene carbonate and ethylene methylene carbonate at a volume ratio of 7:3 to 1.0 M, the surfactant is introduced in an amount of 1 wt% based on 100 wt% of the electrolyte, and 'Permeability before storing electrolyte' and 'Permeability after storing electrolyte' are determined by using a hazemeter according to ASTM-D1003.

9.  The polyolefin separator according to claim 8, wherein the surfactant has a change in permeability of 50% or less before and after storing the electrolyte.

10. The polyolefin separator according to claim 8, which is for use in an electrochemical device and has a water contact angle of 100° or less.

11. An electrochemical device comprising a positive electrode, a negative electrode and the separator as defined in claim 8, interposed between the positive electrode and the negative electrode.

12. The electrochemical device according to claim 11, which is a lithium secondary battery.

FIG. 1

FIG. 2

FIG. 3

## INTERNATIONAL SEARCH REPORT

| International application No. |
| --- |
| **PCT/KR2023/002039** |

| | |
| --- | --- |
| **A.** | **CLASSIFICATION OF SUBJECT MATTER** |
| | **H01M 50/417**(2021.01)i; **H01M 50/403**(2021.01)i; **H01M 50/44**(2021.01)i; **H01M 50/489**(2021.01)i; **H01M 10/052**(2010.01)i |
| | According to International Patent Classification (IPC) or to both national classification and IPC |

| | |
| --- | --- |
| **B.** | **FIELDS SEARCHED** |
| | Minimum documentation searched (classification system followed by classification symbols) |
| | H01M 50/417(2021.01); B32B 3/26(2006.01); B32B 5/22(2006.01); H01M 10/40(2006.01); H01M 2/16(2006.01); H01M 50/40(2021.01); H01M 50/409(2021.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 리튬 이차 전지(lithium secondary battery), 폴리올레핀 분리막(polyolefin separator), 기공형성제(pore forming agent), 추출조(extraction tank), 유기용매(organic solvent), 물(water), 계면활성제 (surfactant), 투과도(permeability), 젖음성(wettability) |

| **C.** | **DOCUMENTS CONSIDERED TO BE RELEVANT** | | |
| --- | --- | --- |
| Category* | Citation of document, with indication, where appropriate, of the relevant passages | Relevant to claim No. |
| X<br><br>Y<br><br>A | KR 10-2021-0117633 A (LG CHEM, LTD.) 29 September 2021 (2021-09-29)<br>See paragraphs [0039], [0047]-[0048], [0051]-[0052], [0056]-[0057] and [0061]; and claim 1. | 1,4-7<br><br>2-3<br><br>8-12 |
| X<br><br>Y | KR 10-2021-0010244 A (LG CHEM, LTD.) 27 January 2021 (2021-01-27)<br>See paragraphs [0036]-[0037], [0041]-[0043], [0055], [0063]-[0065], [0082]-[0083], [0122] and [0124]. | 8-12<br><br>2-3 |
| A | WO 2009-048173 A1 (TONEN CHEMICAL CORPORATION) 16 April 2009 (2009-04-16)<br>See entire document. | 1-12 |

| | |
| --- | --- |
| ✓ Further documents are listed in the continuation of Box C. | ✓ See patent family annex. |

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**23 May 2023** | Date of mailing of the international search report<br><br>**24 May 2023** |
| Name and mailing address of the ISA/KR<br><br>**Korean Intellectual Property Office**<br>**Government Complex-Daejeon Building 4, 189 Cheongsa-ro, Seo-gu, Daejeon 35208**<br><br>Facsimile No. **+82-42-481-8578** | Authorized officer<br><br><br><br>Telephone No. |

Form PCT/ISA/210 (second sheet) (July 2022)

EP 4 478 516 A1

**INTERNATIONAL SEARCH REPORT**

International application No.

**PCT/KR2023/002039**

**C.     DOCUMENTS CONSIDERED TO BE RELEVANT**

| Category* | Citation of document, with indication, where appropriate, of the relevant passages | Relevant to claim No. |
|---|---|---|
| A | US 2017-0092920 A1 (TORAY BATTERY SEPARATOR FILM CO., LTD.) 30 March 2017 (2017-03-30)<br>   See entire document. | 1-12 |
| A | US 2006-0234031 A1 (TAKATA, Atsuhiro et al.) 19 October 2006 (2006-10-19)<br>   See entire document. | 1-12 |

Form PCT/ISA/210 (second sheet) (July 2022)

**INTERNATIONAL SEARCH REPORT**
**Information on patent family members**

| International application No. |
|---|
| **PCT/KR2023/002039** |

| Patent document cited in search report | | | Publication date (day/month/year) | Patent family member(s) | | | Publication date (day/month/year) |
|---|---|---|---|---|---|---|---|
| KR | 10-2021-0117633 | A | 29 September 2021 | None | | | |
| KR | 10-2021-0010244 | A | 27 January 2021 | None | | | |
| WO | 2009-048173 | A1 | 16 April 2009 | CN | 101821876 | A | 01 September 2010 |
| | | | | CN | 101821876 | B | 17 April 2013 |
| | | | | CN | 101855750 | A | 06 October 2010 |
| | | | | CN | 101855750 | B | 07 August 2013 |
| | | | | CN | 101855751 | A | 06 October 2010 |
| | | | | CN | 101855751 | B | 06 November 2013 |
| | | | | EP | 2212944 | A1 | 04 August 2010 |
| | | | | EP | 2212944 | B1 | 04 June 2014 |
| | | | | EP | 2212945 | A2 | 04 August 2010 |
| | | | | EP | 2212945 | B1 | 21 August 2013 |
| | | | | EP | 2212946 | A1 | 04 August 2010 |
| | | | | EP | 2212946 | B1 | 27 February 2013 |
| | | | | JP | 2011-500354 | A | 06 January 2011 |
| | | | | JP | 2011-500881 | A | 06 January 2011 |
| | | | | JP | 2011-503247 | A | 27 January 2011 |
| | | | | JP | 2013-224033 | A | 31 October 2013 |
| | | | | JP | 5061243 | B2 | 31 October 2012 |
| | | | | JP | 5492777 | B2 | 14 May 2014 |
| | | | | JP | 5651731 | B2 | 14 January 2015 |
| | | | | KR | 10-1143245 | B1 | 18 May 2012 |
| | | | | KR | 10-1174986 | B1 | 17 August 2012 |
| | | | | KR | 10-1174995 | B1 | 17 August 2012 |
| | | | | KR | 10-1347460 | B1 | 03 January 2014 |
| | | | | KR | 10-2010-0053685 | A | 20 May 2010 |
| | | | | KR | 10-2010-0057901 | A | 01 June 2010 |
| | | | | KR | 10-2010-0082778 | A | 19 July 2010 |
| | | | | KR | 10-2012-0083515 | A | 25 July 2012 |
| | | | | US | 2009-0098465 | A1 | 16 April 2009 |
| | | | | US | 2009-0117454 | A1 | 07 May 2009 |
| | | | | US | 2009-0123822 | A1 | 14 May 2009 |
| | | | | US | 8323821 | B2 | 04 December 2012 |
| | | | | US | 8338017 | B2 | 25 December 2012 |
| | | | | US | 8748028 | B2 | 10 June 2014 |
| | | | | WO | 2009-048172 | A1 | 16 April 2009 |
| | | | | WO | 2009-048175 | A2 | 16 April 2009 |
| | | | | WO | 2009-048175 | A3 | 28 May 2009 |
| US | 2017-0092920 | A1 | 30 March 2017 | CN | 106103560 | A | 09 November 2016 |
| | | | | CN | 106103560 | B | 09 January 2018 |
| | | | | EP | 3098256 | A1 | 30 November 2016 |
| | | | | EP | 3098256 | B1 | 18 March 2020 |
| | | | | JP | 5876632 | B1 | 02 March 2016 |
| | | | | KR | 10-1716249 | B1 | 14 March 2017 |
| | | | | KR | 10-2016-0106177 | A | 09 September 2016 |
| | | | | US | 10079378 | B2 | 18 September 2018 |
| | | | | WO | 2015-182691 | A1 | 03 December 2015 |
| | | | | WO | 2015-182691 | A1 | 20 April 2017 |
| US | 2006-0234031 | A1 | 19 October 2006 | CN | 1846840 | A | 18 October 2006 |
| | | | | JP | 2006-307193 | A | 09 November 2006 |

Form PCT/ISA/210 (patent family annex) (July 2022)

## INTERNATIONAL SEARCH REPORT
### Information on patent family members

International application No.

**PCT/KR2023/002039**

| Patent document cited in search report | Publication date (day/month/year) | Patent family member(s) | | Publication date (day/month/year) |
|---|---|---|---|---|
| | | JP 5347213 B2 | | 20 November 2013 |
| | | KR 10-1298501 B1 | | 21 August 2013 |
| | | KR 10-2006-0106720 A | | 12 October 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220017777